# EUROPEAN PATENT SPECIFICATION

(11) **EP 2 382 336 B1**
(45) Date of publication and mention of the grant of the patent: **06.03.2013**
(21) Application number: 09795725.2
(22) Date of filing: 23.12.2009
(51) Int. Cl.: C23C 22/00, C23C 30/00, H01M 8/02

(54) **COATED PRODUCT FOR USE IN AN ELECTROCHEMICAL DEVICE AND A METHOD FOR PRODUCING SUCH A PRODUCT**
BESCHICHTETES PRODUKT ZUR VERWENDUNG IN EINER ELEKTROCHEMISCHEN VORRICHTUNG UND VERFAHREN ZUR HERSTELLUNG EINES DERARTIGEN PRODUKTS
PRODUIT REVÊTU À UTILISER DANS UN DISPOSITIF ÉLECTROCHIMIQUE ET PROCÉDÉ DE PRODUCTION D'UN TEL PRODUIT

(30) Priority: 29.12.2008 EP 08022480
(43) Date of publication of application: 02.11.2011
(73) Proprietor: Hille & Müller GmbH, 40589 Düsseldorf (DE)
(72) Inventor: WIJENBERG, Jacques Hubert Olga Joseph, 1019 PE Amsterdam (NL); BERENDS, Anke Marja, 2082 VC Santpoort-Zuid, (NL); DE VOOYS, Arnoud Cornelis Adriaan, 3602 PJ Maarssen (NL); REIJERSE, Joost Freek Cees-Jan Martijn, 2026 SM Haarlem (NL)
(74) Representative: Bodin, Andre
(86) International application number: PCT/EP2009/009246
(87) International publication number: WO 2010/075998

(56) References cited:
- DE-A1- 10 306 649

## Description

This invention relates to a coated product for use in an electrochemical device, such as in fuel cells, electrolysers or batteries, and a method for producing such a product.

Fuel cells are electrochemical devices that convert the chemical energy of a reaction directly into electrical energy. The basic physical structure, or building block, of a fuel cell consists of an electrolyte layer in contact with a porous anode and cathode on either side. Electrolysers are electrochemical devices that convert electrical energy into chemical energy, such as the electrolysis of water into hydrogen and oxygen.

In a typical fuel cell, fuels are fed continuously to the anode and an oxidant is fed continuously to the cathode. The electrochemical reactions take place at the electrodes to produce an electric current. The fuel cell is an energy conversion device that theoretically has the capability of producing electrical energy for as long as fuel and oxidant are supplied to the electrodes. In reality, degradation, particularly of the membrane electrode assembly (MEA), corrosion, or malfunction of components limits the practical operating life of fuel cells. The electrolyte does not conduct electricity, thereby preventing short circuiting of the cell. It also provides a physical barrier to prevent the fuel and oxidant gas streams from directly mixing.

As with batteries, individual fuel cells must be combined to produce appreciable voltage levels and so are joined by interconnects. Because of the usual configuration of a flat plate cell, the interconnect is formed by a separator plate or a bipolar plate with the function to provide an electrical series connection between adjacent cells, specifically for flat plate cells, and to provide a gas barrier that separates the fuel and oxidant of adjacent cells. Interconnects must be an electrical conductor and impermeable to gases and liquids. The design of the bipolar plate is vital to the performance of the stack. The plate must be capable of effectively distributing gas or liquid to reduce transport resistance while providing the path for electronic current, removal of product water and heat conduction. Contact resistance should be minimized and therefore, if the bipolar plate is made of a metallic material, it is important that low-conducting oxide layers are not formed between the electrodes and the separator plate.

The bipolar plates are typically made of a corrosion resistant and electrically conductive material, such as stainless steel, titanium, aluminium, polymeric carbon composites, etc., so that they conduct the electricity generated by the fuel cells from one cell to the next cell and out of the stack. Metal bipolar plates typically produce a natural oxide on their outer surface that makes them resistant to corrosion. However, the oxide layer is usually not very conductive, and thus increases the internal resistance of the fuel cell, reducing its electrical performance. Plating the metallic separator plates with noble metals such as gold avoids the formation of the oxide layer, but this makes the plates very expensive.

Various processes have been proposed in the art to deposit hydrophilic and electrically conductive materials onto a bipolar plate. Typically, these processes are two step processes and are expensive. For example, one process includes first depositing a gold layer onto a stainless steel bipolar plate by a physical vapour deposition (PVD) process, and then depositing a silicon dioxide (SiO2) layer on the gold layer by a plasma enhanced chemical vapour deposition (CVD) process. Other processes include co-sputtering gold and silicon dioxide onto the bipolar plate substrate. However, all of these processes are fairly cost prohibitive.

It is an object of this invention to provide a coated product for use as a separator plate in electrochemical devices, such as fuel cells or electrolysers, or in batteries, which is resistant to corrosion, has good electrical conductivity and can be produced at low cost.

This object is reached by providing a coated product comprising a metal sheet substrate provided with a coating system, said coating system comprising a first metal layer, such as a chromium layer, as an outer layer and a second metal layer, such as a nickel-containing coating layer comprising or consisting substantially of nickel or a nickel-alloy, as a layer between the first metal layer and the substrate, and wherein an alloy diffusion layer comprising the first and the second metal, such as nickel and chromium, is present so as to provide the substrate with a corrosion resistant coating system. For example, by providing a nickel and chromium diffusion layer, the metal sheet substrate is provided with a coating system having the characteristics of a nickel-chromium alloy in the diffusion layer. It should be noted that e.g. the second metal may be a single metal, such as nickel, but it may also be an alloy, such as nickel-molybdenum. In the context of this description, outer is defined as the farthest removed from the substrate. In most cases the outer layer is also the outermost layer, and therefore contacting the prevailing environment. In the context of this invention fuel cells, such as PEM fuel cells, are deemed to comprise not only the Nafion-type (Low Temperature PEMFC) and H₃PO₄-impregnated-into-a-carrier-membrane-type fuel cell (High Temperature PEMFC) but also the H₃PO₄-impregnated-into-a-Polybenzimidazole-carrier-membrane fuel cell (High Temperature PEMFC) and other types currently under development. The invention is therefore not limited to the aforementioned specifically mentioned fuel cell types only, but also comprises other electrochemical devices such as batteries and electrolysers, where electrolysers can for instance be fuel cells operating in a reverse manner (under applied potential). Polymer Electrolyte Membrane (PEM) fuel cells, also called Proton Exchange Membrane fuel cells, are the type typically used in automotive applications. Also in the context of this invention a nickel-containing layer is a layer in which nickel is intentionally present. It may be a layer consisting substantially or totally of nickel, or a layer comprising nickel, such as a nickel-alloy layer. In the context of this invention the term corrosion resistant coating system is deemed to mean corrosion resistant against the conditions under the prevailing conditions in the fuel cell.

Depending on the thickness of the various layers in the coating system, and the duration and annealing temperature used during the diffusion annealing treatment, the diffusion layer may be limited to the region of the interface between the first metal layer and the second metal layer, but the diffusion layer may also extend over more than one layer or even all layers of the coating system thereby effectively producing a coating system of which a large part or all shows a concentration gradient of the various metals which were present in the individual layer prior to the diffusion annealing. Diffusion of the substrate into the coating system and vice versa may occur.

According to an embodiment of the invention, the metal sheet substrate comprises, or consists substantially of, an unalloyed or low-alloy steel, or a stainless steel, or aluminium or an aluminium alloy, or titanium. In order to produce a cost effective separator plate the substrate must be as cheap as possible. This is achieved by selecting a simple stainless steel, or an unalloyed or low-alloy steel, or aluminium or an aluminium alloy. These cheaper materials may not be as corrosion resistant as the commonly used stainless steels for separator plates, but the coating system according to the invention enhances the corrosion resistance of the cheaper steels to the level of that of the more expensive stainless steel commonly used for separator plates.

According to an embodiment of the invention the metal sheet substrate is provided with a nickel-containing layer between the substrate and the second metal layer and wherein the nickel-containing layer is a nickel-layer, a nickel-molybdenum alloy layer, a nickel-chromium alloy layer, or a nickel-molybdenum-chromium alloy layer. In this embodiment, the corrosion resistance of the alloy which is formed during diffusion annealing is even further improved. By the introduction of molybdenum in the alloy the properties of alloys such as Hastelloy^{®} C-2000, a commercial alloy for application in acid environments, supplied by Haynes International, Inc can be achieved. This way, the properties of an expensive alloy can be emulated by applying a suitable coating system on a much cheaper substrate and subsequently annealing this coating system. Additional alloying elements, such as copper, can be added to the coating system by adding an additional plating layer before annealing.

According to an embodiment of the invention the second metal layer, such as a nickel-containing layer, comprises a spatial distribution of conductive particles such as conductive ceramic particles or carbon particles such as graphite particles. In this embodiment, the electrical conductivity of the coating system is increased by the incorporation of the particles in the second metal layer. Since these particles are inert, they will remain largely in place during the annealing step and hence still provide the increased electrical conductivity after the annealing step.

In an embodiment of the invention the metal sheet substrate is provided with a nickel-containing layer between the substrate and the second metal layer. In this embodiment the nickel-containing layer is mainly intended to provide an improved adhesion of the coating system to the metal substrate. For this nickel-containing layer a so-called Woods nickel strike may be used. Another purpose of this nickel-containing layer may be to increase the nickel content in the alloy diffusion layer.

In a second aspect a method for producing a coated product in accordance with the invention is provided wherein a metal sheet substrate is provided with a coating system of at least a second metal layer by a first application step and a first metal layer by a second application step, and wherein said coating system is subjected to a diffusion annealing operation so as to induce the formation of an alloy diffusion layer comprising at least the first metal and the second metal. In the context of this invention, the second metal layer is always between the first metal layer and the substrate, but there may be additional layers between the second metal layer and the substrate.

According to an embodiment of the invention the metal sheet substrate is an unalloyed or low-alloy steel or a stainless steel or aluminium or an aluminium alloy or titanium. In order to produce a cost effective separator plate the substrate must be as cheap as possible. This is achieved by selecting a simple stainless steel or even an unalloyed or low-alloy steel. These cheaper steels may not be as corrosion resistant as the commonly used stainless steels for separator plates, but the coating system according to the invention enhances the corrosion resistance of the cheaper steels to the level of that of the more expensive stainless steel commonly used for separator plates. Said steel types can be provided in the form of plate, sheet or a coiled strip. The application steps are preferably by means of a plating operation and are preferably performed in continuous coating lines such as electroplating lines. However, the application steps may also be performed by other coating techniques such as electroless plating, PVD, CVD, plasma-coating etc.

According to an embodiment of the invention the metal sheet substrate is provided with a chromium-containing layer as the first metal layer and a nickel-containing layer as the second metal layer, and wherein the alloy diffusion layer comprises nickel and chromium. The Ni-Cr-alloy diffusion layer provides a stainless-steel-like corrosion resistance to the coating system.

According to an embodiment of the invention the metal sheet substrate is provided with a nickel-containing layer between the substrate and the second metal coating layer by an application step wherein the nickel-containing layer is a nickel-layer, a nickel-molybdenum alloy layer, a nickel-chromium alloy layer, or a nickel-molybdenum-chromium alloy layer. It will be clear that this additional layer is provided to the substrate prior to the application of the second metal coating layer.

According to an embodiment of the invention the second metal layer, such as a nickel-containing layer, is provided with a spatial distribution of conductive particles. As an additional component, the electroplating bath contains electrically conductive particles such as, for example, elemental carbon as fine carbon, graphite or carbon black or, for example, titanium disulfide, tantalum disulfide or molybdenum silicide or mixtures thereof, which are co-deposited on the base material together with the metal of the second metal layer, such as nickel, during electroplating. The second metal with which electrically conductive particles can be co-deposited are nickel, chromium, cobalt, iron, molybdenum, tungsten, zinc, copper, gold, silver, platinum or mixtures or alloys thereof. However, for economical reasons, it is preferable to use a nickel-containing metal layer to co-deposit the particles with.

These dispersed conductive particles reduce the resistance of the coating layer in which they are dispersed. When carbon in the form of graphite particles is used, the carbon content of the electroplated coating is preferably between about 0.7% and 15%. A further embodiment of the invention proposes that the electroplating bath contains suspension stabilizing and/or coagulation reducing substances in order to achieve a uniform distribution of the electrically conductive particles. It may also be advantageous to provide the electroplating bath with stabilizing and/or coagulation reducing substances that result in hard brittle coatings, as is the case, for example, with so-called brighteners. Furthermore, the added substances can also act as brightening or pore reducing agents.

According to an embodiment of the invention the method comprises the production of a blank for producing a separator plate by a forming operation, and wherein one, more or all of the three application steps and/or the diffusion annealing step take place only after the separator plate has been formed in the forming operation. Although the application operation and annealing, such as a plating operation and a continuous annealing process, is likely to be cheaper when performed in a continuous plating and/or annealing line, and the blanking operation is then subsequently performed from the coated steel substrate, it may be convenient to produce the blank from an uncoated substrate and provide the coating system on the formed blank. The annealing operation is also likely to be cheaper when performed in a continuous annealing line, but there may be advantages in performing the annealing on the coated and formed separator plate. One of these advantages is that when the plating is performed on the formed separator plate that the cut edges of the plate are also plated and thus also protected against corrosion. When forming the separator plate from a blank stamped from a continuously plated and annealed strip, the substrate metal is bare at the cut edges and may need to be protected against corrosion or the design of the fuel cell must be such that the cut edges do not come into contact with the corrosive environment prevailing in the fuel cell.

In an embodiment the formed coated product is produced by a forming operation, and wherein the application steps and the diffusion annealing step take place before the formed coated product is formed in the forming operation.

The annealing operation preferably takes place in a protective gas atmosphere at a temperature ranging from 550°C to 1100°C as a function of type of substrate used. For a low alloy or unalloyed steel, the annealing temperature preferably does not exceed 920°C to avoid re-austenitisation. The annealing may also cause microstructural changes such as recovery, recrystallisation or ageing of the substrate and it may cause the deposited metal of the second metal layer or the constituents of any layers between the second metal layer and the substrate to diffuse into the base material. This may result in an improved adhesion of the coating system to the substrate during forming. The annealing time is chosen in dependence of the desired diffusion layer thickness and composition. When a lower annealing temperature is chosen, or has to be chosen, for instance in case of a low melting substrate such as aluminium, the annealing time can be chosen correspondingly longer because in case of a diffusion processes, the required time and temperature are coupled.

In a third aspect of the invention a fuel cell, such as a PEM fuel cell, comprising a stack of fuel cells separated by separator plates according to the invention and/or produced by the method of the invention is provided.

In a non-limiting example a plain carbon steel is coated with a nickel plating layer from a Watts-type nickel bath. The electroplating bath comprises not only Ni-ions but also conductive particles of fine carbon, graphite, carbon black, tantalum disulfide, titanium disulfide or molybdenum silicide finely distributed in the form of a suspension with a particle size ranging from 0.5 to 15 µm, and are kept in suspension by strong agitation of the electrolyte bath. During electrolytic treatment of the cold-rolled sheet metal, following optional prior degreasing, rinsing, pickling, rinsing, etc., a joint deposition of both the aforementioned elements and the conductive particles is formed on the surface. Additives to the plating bath may be used to keep the suspension uniform and prevent flocculation and coagulation of the particles.

The mass transfer rate in a strip plating line may also be enhanced by increasing the line speed or by agitation, by which the thickness of the diffusion layer adjacent to the moving strip is reduced. Agitation can be realised by means of eductors or by introducing a moving or rotating body between the moving strip and the anodes. Examples of means to enhance the mass transfer rate during electrodeposition are disclosed in EP1278899, the contents of which are hereby included by reference, particularly sections [0008] to [0026].

A cold-rolled steel strip can be treated in a strip plating plant for instance by degreasing, rinsing, pickling, rinsing, followed by nickel plating in a Watts-type nickel bath comprising 60 g/l Ni₂SO₄, 30 g/l NiCl₂, Boric acid 40 g/l, Graphite 40 g/l of grain size 1-8 µm at a pH of 2.3, a bath temperature of 60°C and a current density of 15 A·dm⁻², turbulent agitation and electrolyte flow 6-10 m/s. Suspension stabilizing and coagulation preventing substances can be, for example, condensation products of formaldehyde and naphtalenesulfonic acid, furthermore ethylene glycol and ethylene alcohol. The nickel layers produced as specified above may measure 0.2-8 µm and the graphite content in the nickel layer is 0.7-15%.

Subsequently, a 1 µm Cr-layer was deposited on top of the Ni-layer from a 250 g/l CrO₃, 1.2 g/l sulphate, 4 g/l H₂SiF₆ (55°C, 50 A·dm⁻²) plating solution. The multilayer coating system was subsequently subjected to diffusion annealing in a reducing atmosphere at 900°C for 9 minutes in a 100% H2(g) gas atmosphere and a dewpoint below -50°C.

In an embodiment the nickel alloy coating layer comprises nickel and molybdenum which is deposited onto the substrate from an aqueous solution comprising nickel salts, gluconate anions, citrate anions and molybdate and wherein the pH of the solution is adjusted between 5.0 and 8.5. Preferably a stress reliever such as ammonium sulphate or ammonium molybdate is added to the plating bath. The gluconate and citrate may be added to the solution as sodium gluconate and sodium citrate. The nickel salt may be added as nickel sulphate and/or nickel chloride. The molybdate, such as sodium molybdate, is preferably added at a concentration of 0.008 mol/l to 0.10 mol/l. Preferably the aqueous solution comprises between 0.005 and 0.5 mol/l sodium gluconate. It was found that the plating bath is preferably maintained at a temperature between 30 and 80°C, preferably between 40 and 70°C, more preferably between 45 and 65°C. Excellent current efficiency is achieved when the cathodic current density is chosen such that the current efficiency is at least 30%. This is achieved when the cathodic current density is at least 8.5 A/dm², more preferably at least 10 A/dm². Preferably the cathodic current density is at least 12.5 A/dm² and at most 40 A/dm², preferably wherein the cathodic current density is between 15 A/dm² and 30 A/dm². It was found that agitation of the plating bath, causes an increase of the mass transfer rate and an increase of the Mo-content in the Ni-Mo alloy.

As an example of a suitable plating bath for depositing a Ni-Mo-alloy plating layer, the aqueous solution comprises
0.53 to 1.06 mol/l NiSO₄
0.028 to 0.68 mol/l NiCl₂
0.008 to 0.08 mol/l alkali metal molybdate
0.45 to 0.54 mol/l sodium citrate
0.023 to 0.207 molll sodium gluconate
0.055 to 1.33 mol/l ammonium e.g. as ammonium sulphate
pH between 5.75 and 7.25.

More specifically the aqueous solution comprises:

| Compound | concentration | |
|---|---|---|
| | g/l | M (or mol/l) |
| NiSO₄ (x 6 H₂O) | 142 | 0.540 |
| NiCl₂ (x 6 H₂O) | 30 | 0.126 |
| Sodium molybdate (x 2 H₂O) | 12.1 | 0.050 |
| Ammoniumsulphate | 34 | 0.257 |
| Tri-sodium citrate (x 3 H₂O) | 140 | 0.476 |
| Sodium gluconate | 30 | 0.138 |
| pH = 6.1 ± 0.2 | | |

The invention is further explained by reference to the following schematic, non-limiting examples of coating systems to be provided upon the metal substrate.

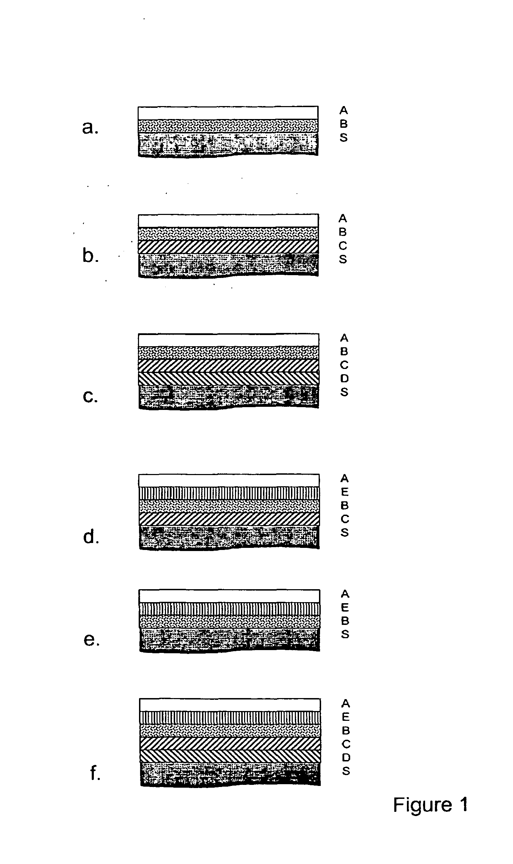

In figure 1a to f examples of coating systems are given which are in accordance with the invention. For the sake of clarity these systems are shown prior to the diffusion annealing so that the individual layers are still clearly distinguishable. In these coating system the following layers may be present:
A: metal layer such as a chromium layer
B: metal layer comprising carbon particles (optional) such as a nickel or nickel containing layer
C: nickel or nickel containing layer (essential if layer B is absent, otherwise optional), the layer optionally comprising carbon particles
D: metal layer e.g. Cr, Mo, ...(optional)
E: metal layer e.g. Cr, CrMo, CuNi, Ni, Mo, Cu, Zr, Co, Mn, Ti, Ag, W, Si, Ta, Au, Pt (optional)
S: Metal substrate (essential)

Figure 1 a is the example wherein the substrate is provided with a first metal layer A and a second metal layer B which optionally comprises a spatial distribution of conductive particles such as conductive ceramic particles or carbon particles, such as graphite particles. The diffusion annealing layer will be formed on the interface between layer A and B. Preferably layer A is a chromium-containing layer and layer B is a nickel- or nickel-molybdenum-containing layer.

Figure 1b is the embodiment wherein an additional metal layer is provided between the second metal layer B which optionally comprises a spatial distribution of carbon particles and the substrate. Preferably first metal layer A is a chromium containing layer and second metal layer B is a nickel- or nickel-molybdenum containing layer. In a preferable embodiment layer C is a nickel-containing layer, such as a Watts nickel layer or a Woods nickel strike. The presence of this layer enables to produce a diffusion layer with a higher nickel content. It may also serve to improve the adhesion of layer B to the substrate.

Figure 1c is the embodiment wherein a further metallic layer is provided below the layer C of the embodiment presented in figure 1b. This further metallic layer enables the production of specific alloys during the diffusion annealing.

The embodiments of figure 1d to 1f are those of figures 1a to 1c respectively with an additional metal layer between the first metal layer A and the second metal layer comprising the carbon particles. This layer is mainly intended to provide the alloying elements for the diffusion annealed alloy layer, but there may also be other reasons to add the additional layer such as adhesion properties.

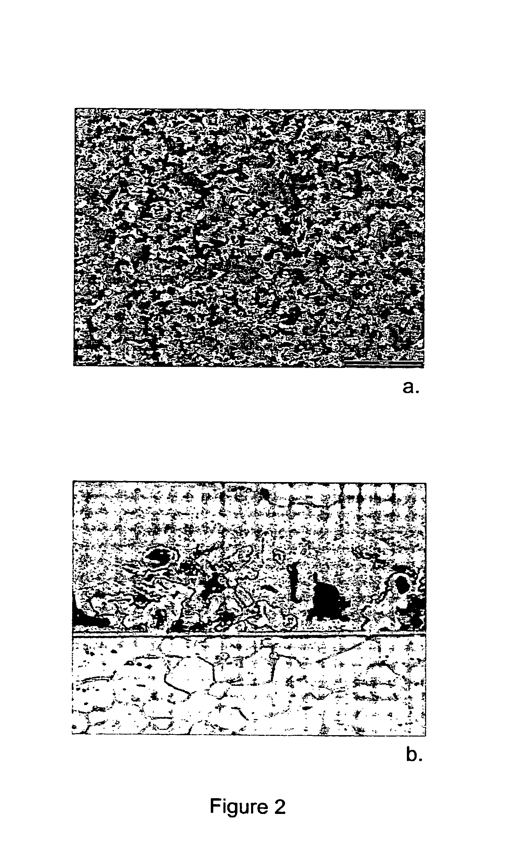

The presence of a first metal layer (layer A) and at least layer B or C is required, because of the formation of the diffusion layer in the coating system. In a preferable embodiment first metal layer A is a chromium containing layer, and second metal layer B or C is preferably a nickel-containing layer, thus allowing the formation of a Ni-Cr diffusion layer in between those layers. In an embodiment the Ni-containing layer comprises carbon particles (see figure 2 for an example hereof). In a preferable embodiment the Ni-containing layer also comprises molybdenum. This Ni-Mo layer is preferably deposited by electroplating from the aqueous solution comprising nickel salts, gluconate anions, citrate anions and molybdate as described hereinabove.

In the embodiments a layer A and/or C is present in combination with a layer B comprising the carbon particles, said layer A and/or C comprising one or more of the following elements such as Ni, Cr, Mo, Cu, Zr, Co, Mn, Ti, Ta, W, Si, Ag, Au and Pt or alloys thereof. Examples of alloys comprising one or more of these elements are Hastelloy B-2, Cupronickel 80-20, Cupronickel 70-30, Everdur 1010, Monel K500, Hastelloy C-276, MA-B2. MA276, MA20NB3, 904L, Aluminiumbronze, and higher grades stainless steels.

In the embodiments where layer B is present, instead of layer C as defined above, a layer C' may be present comprising alloys such as Hastelloy B-2, Cupronickel such as Cu80-Ni20 or Cu70-Ni30, Aluminium-Bronze, Everdur 1010, Monel K500, Hastelloy C-276, MA-B2, MA276, MA20NB3, 904L, higher grades stainless steels or elements such as Ni, Cr, Mo, Cu, Zr, Co, Mn, Ti, Ag, Au, Ta, W, si, Pt.

Layer E will mainly be used when there is a desire to add alloying elements which will be incorporated in the alloy diffusion layer.

Figure 2a provides a top view of a nickel layer comprising carbon particles and figure 2b provides a cross section thereof.

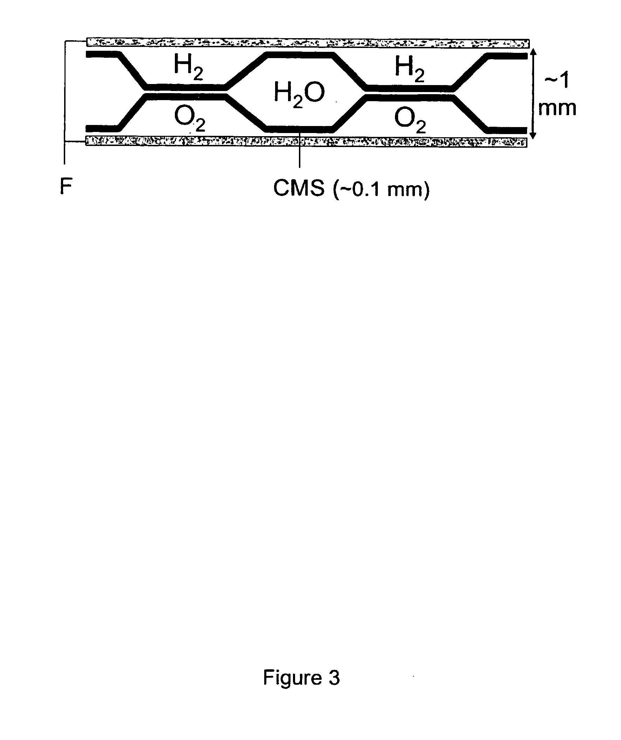

Figure 3 provides a schematical view of two separator plates (CMS, coated metal sheet) provided with a coating system in accordance to the invention on at least the side not contacting the coolant (in this example water is used as coolant) wherein these plates typically have a thickness of about 0.1 mm, and two gas diffusion layers or membrane electrode assembly (MEA) (F). the total thickness of the system in figure 3 is about 1 mm.

## Claims

1. A coated product for use in an electrochemical device comprising a metal sheet substrate provided with a coating system, said coating system comprising a first metal layer (A) as an outer layer and a second metal coating layer (B) as a layer between the first metal layer (A) and the substrate (S), and wherein an alloy diffusion layer comprising the first metal and the second metal is present so as to provide the substrate with a corrosion resistant coating system, wherein the first metal layer (A) is a chromium containing layer and the second metal layer (B) is a nickel- or nickel-molybdenum-containing layer and wherein the alloy diffusion layer comprises at least nickel and chromium.

2. A coated product according to claim 1, wherein the coated product is a separator plate for use in a fuel cell, or a separator plate for an electrolyser, or a product for application into a battery.

3. A coated product according to any one of claims 1 to 2, wherein the second metal layer (B) comprises a spatial distribution of conductive particles such as conductive ceramic particles or graphite.

4. A coated product according to any one of claims 1 to 3, wherein the metal sheet substrate (S) is an unalloyed or low-alloy steel, or wherein the metal sheet substrate is a stainless steel, aluminium or an aluminium alloy, or titanium.

5. A coated product, such as a separator plate, according to claim 3, wherein the metal sheet substrate is provided with a cobalt-containing layer (C) between the substrate (S) and the second metal layer (B).

6. A coated product, such as a separator plate, according to any one of claims 1 to 4, wherein the metal sheet substrate is provided with a nickel-containing layer (C) between the substrate (S) and the second metal layer (B) and wherein the nickel-containing layer (C) is a nickel-layer, a nickel-molybdenum alloy, a nickel-chromium alloy, or a nickel-molybdenum-chromium alloy layer.

7. A method for producing a coated product according to any one of the preceding claims wherein a metal sheet substrate (S) is provided with a coating system of at least a second metal layer (B) by a first application step and a first metal outer layer (A) by a second application step, and wherein said coating system is subjected to a diffusion annealing operation so as to induce the formation of an alloy diffusion layer comprising at least the first metal and the second metal.

8. A method according to claim 7, wherein the coated product is a separator plate for use in a fuel cell, or a separator plate for an electrolyser, or a product for application into a battery.

9. A method according to any one of claims 7 or 8, wherein the second metal layer (B) is provided with a spatial distribution of conductive particles such as graphite, preferably wherein the second metal layer is a nickel-containing layer.

10. A method according to any one of claims 7 to 9, wherein the metal sheet substrate is an unalloyed or low-alloy steel or wherein the metal sheet substrate is a stainless steel, aluminium or an aluminium alloy, or titanium.

11. A method according to any one of claims 7 to 10, wherein the first metal layer (A) is a chromium containing layer and the second metal layer (B) is a nickel- or nickel-molybdenum-containing layer and wherein the alloy diffusion layer comprises at least nickel and chromium.

12. A method according to any one of claims 7 to 11, wherein the metal sheet substrate (S) is provided with a nickel-containing layer (C) between the substrate (S) and the second metal layer (B) by an application step wherein the nickel containing layer (C) is a nickel layer, or a nickel-molybdenum alloy, a nickel-chromium alloy, or a nickel-molybdenum-chromium alloy layer.

13. A method according to any one of claims 7 to 12, comprising the production of a formed coated product by a forming operation, and wherein one, more or all of the application steps and/or the diffusion annealing step take place only after the formed coated product has been formed in the forming operation.

14. A method according to any one of claims 7 to 12, comprising the production of a formed coated product by a forming operation, and wherein the application steps and the diffusion annealing step take place before the formed coated product is formed in the forming operation.

15. A fuel cell or an electrolyser comprising a stack of fuel cells separated by separator plates according to any one of claims 1 to 6 and/or produced by any one of claims 7 to 13.

## Patentansprüche

1. Beschichtetes Produkt zur Verwendung in einer elektrochemischen Apparat, die als Basis ein Metallblech umfasst, welches mit einem Schichtsystem versehen ist, wobei das Beschichtungssystem eine erste Metallschicht (A) als äußere Schicht und eine zweite Metallbeschichtung (B) als Schicht zwischen der ersten Metallschicht (A) und dem Basismetall (S) umfasst, und wobei eine Legierungsdiffusionsschicht, die das erste Metall und das zweite Metall umfasst, vorhanden ist, um so das Basismetall mit einem korrosionsbeständigen Beschichtungsaufbau zu versehen, wobei die erste Metallschicht (A) eine chromhaltige Schicht ist und die zweite Metallschicht (B) eine nickel- oder nickel-molybdänhaltige Schicht ist, und wobei die Legierungsdiffusionsschicht zumindest Nickel und Chrom umfasst.

2. Beschichtetes Produkt nach Anspruch 1, wobei das beschichtete Produkt eine Bipolarplatte zur Verwendung in einer Brennstoffzelle oder eine Bipolarplatte für einen Elektrolyseur oder ein Produkt zur Anwendung in einer Batterie ist.

3. Beschichtetes Produkt nach einem der Ansprüche 1 bis 2, wobei die zweite Metallschicht (B) räumlich verteilte, leitfähige Teilchen umfasst, wie zum Beispiel leitfähige Keramikteilchen oder Graphit.

4. Beschichtetes Produkt nach einem der Ansprüche 1 bis 3, wobei das Blechsubstrat (S) unlegierter oder niedrig legierter Stahl ist, oder wobei das Blechsubstrat ein Edelstahl, Aluminium oder eine Aluminiumlegierung oder Titan ist.

5. Beschichtetes Produkt, wie zum Beispiel eine Trennplatte, nach Anspruch 3, wobei das metallische Basismaterial mit einer kobalthaltigen Schicht (C) zwischen dem Basismaterial (S) und der zweiten Metallschicht (B) versehen ist.

6. Beschichtetes Produkt, wie zum Beispiel eine Bipolarplatte, nach einem der Ansprüche 1 bis 4, wobei das metallische Basismaterial mit einer nickelhaltigen Schicht (C) zwischen dem Basismaterial (S) und der zweiten Metallschicht (B) versehen ist, und wobei die nickelhaltige Schicht (C) eine Nickelschicht, eine Nickel-Molybdänlegierungs-, eine Nickel-Chromlegierungs- oder eine Nickel-Molybdän-Chrom-Legierungsschicht ist.

7. Verfahren zum Herstellen eines beschichteten Produkts nach einem der vorherigen Ansprüche, wobei ein metalisches Basismaterial (S) mit einem Schichtaufbau aus mindestens einer zweiten Metallschicht (B) durch einen ersten Auftragsschritt und eine erste Metallaußenschicht (A) durch einen zweiten Auftragsschritt versehen ist, und wobei der Beschichtungsaufbau einer Diffusionsglühbehandlung unterzogen ist, um so die Bildung einer Legierungsdiffusionsschicht zu bewirken, die zumindest das erste Metall und das zweite Metall umfasst.

8. Verfahren nach Anspruch 7, wobei das beschichtete Produkt eine Bipolarplatte zur Verwendung in einer Brennstoffzelle oder eine Bipolarplatte für einen Elektrolyseur oder ein Produkt zur Anwendung in einer Batterie ist.

9. Verfahren nach einem der Ansprüche 7 oder 8, wobei die zweite Metallschicht (B) mit räumlich verteilten, leitfähigen Teilchen, wie zum Beispiel Graphit, versehen ist, wobei die zweite Metallschicht vorzugsweise eine nickelhaltige Schicht ist.

10. Verfahren nach einem der Ansprüche 7 bis 9, wobei das Blechsubstrat ein unlegierter oder niedrig legierter Stahl ist, oder wobei das Blechsubstrat ein Edelstahl, Aluminium oder eine Aluminiumlegierung oder Titan ist.

11. Verfahren nach einem der Ansprüche 7 bis 10, wobei die erste Metallschicht (A) eine chromhaltige Schicht ist und die zweite Metallschicht (B) eine nickel- oder nickel-molybdänhaltige Schicht ist, und wobei die Legierungsdiffusionsschicht zumindest Nickel und Chrom umfasst.

12. Verfahren nach einem der Ansprüche 7 bis 11, wobei das Blechsubstrat (S) mit einer nickelhaltigen Schicht (C) zwischen dem Substrat (S) und der zweiten Metallschicht (B) durch einen Auftragsschritt versehen ist, wobei die nickelhaltige Schicht (C) eine Nickelschicht, eine Nickel-Molybdänlegierungs-, eine Nickel-Chrom-Legierungs- oder eine Nickel-Molybdän-Chrom-Legierungsschicht ist.

13. Verfahren nach einem der Ansprüche 7 bis 12, das die Herstellung eines geformten, beschichteten Produktes durch ein Umformverfahren ist, und wobei ein, mehrere oder alle Auftragsschritte und/oder der Diffusionsglühschritt erst stattfinden, nachdem das geformte, beschichtete Produkt durch das Umformverfahren geformt wurde.

14. Verfahren nach einem der Ansprüche 7 bis 12, das die Herstellung eines geformten, beschichteten Produktes durch ein Umformverfahren ist, und wobei ein, mehrere oder alle Auftragsschritte und/ oder der Diffusionsglühschritt stattfinden, bevor das geformte, beschichtete Produkt durch das Umformverfahren geformt wird.

15. Brennstoffzelle oder Elektrolyseur, der eine Stapel von Brennstoffzellen umfasst, die durch Bipolarplatten nach einem der Ansprüche 1 bis 6 getrennt und/oder nach einem der Ansprüche 7 bis 13 hergestellt sind.

## Revendications

1. Produit revêtu pour une utilisation dans un dispositif électrochimique comprenant un substrat en feuille métallique muni d'un système de revêtement, ledit système de revêtement comprenant une première couche métallique (A) en tant que couche externe et une seconde couche de revêtement métallique (B) en tant que couche entre la première couche métallique (A) et le substrat (S), et dans lequel une couche de diffusion d'alliage comprenant le premier métal et le second métal est présente de sorte à fournir au substrat un système de revêtement résistant à la corrosion, dans lequel la première couche métallique (A) est une couche contenant du chrome et la seconde couche métallique (B) est une couche contenant du nickel ou du nickel-molybdène, et dans lequel la couche de diffusion d'alliage comprend au moins du nickel et du chrome.

2. Produit revêtu selon la revendication 1, le produit revêtu étant une plaque bipolaire pour une utilisation dans une pile à combustible, ou une plaque bipolaire pour un électrolyseur, ou un produit pour une application dans une batterie.

3. Produit revêtu selon l'une quelconque des revendications 1 à 2, dans lequel la seconde couche métallique (B) comprend une distribution spatiale des particules conductrices telles que les particules de céramique conductrices ou le graphite.

4. Produit revêtu selon l'une quelconque des revendications 1 à 3, dans lequel le substrat en feuille métallique (S) est un acier non allié ou faiblement allié, ou dans lequel le substrat en feuille métallique est un acier inoxydable, de l'aluminium ou un alliage d'aluminium, ou du titane.

5. Produit revêtu, tel qu'une plaque bipolaire, selon la revendication 3, dans lequel le substrat en feuille métallique est muni d'une couche contenant du cobalt (C) entre le substrat (S) et la seconde couche métallique (B).

6. Produit revêtu, tel qu'une plaque bipolaire, selon l'une quelconque des revendications 1 à 4, dans lequel le substrat en feuille métallique est muni d'une couche contenant du nickel (C) entre le substrat (S) et la seconde couche métallique (B) et dans lequel la couche contenant du nickel (C) est une couche de nickel, un alliage de nickel-molybdène, un alliage de nickel-chrome, ou une couche d'alliage de nickel-molybdène-chrome.

7. Procédé de production d'un produit revêtu selon l'une quelconque des revendications précédentes, dans lequel un substrat en feuille métallique (S) est muni d'un système de revêtement d'au moins une seconde couche métallique (B) par une première étape d'application et une première couche externe métallique (A) par une seconde étape d'application, et dans lequel ledit système de revêtement est soumis à une étape de recuit de diffusion afin d'induire la formation d'une couche de diffusion d'alliage comprenant au moins le premier métal et le second métal.

8. Procédé selon la revendication 7, dans lequel le produit revêtu est une plaque bipolaire pour une utilisation dans une pile à combustible, ou une plaque bipolaire pour un électrolyseur, ou un produit pour une application dans une batterie.

9. Procédé selon l'une quelconque des revendications 7 ou 8, dans lequel la seconde couche métallique (B) comprend une distribution spatiale de particules conductrices telles que les particules de céramique conductrices ou le graphite, de préférence dans lequel la seconde couche métallique est une couche contenant du nickel.

10. Procédé selon l'une quelconque des revendications 7 à 9, dans lequel le substrat en feuille métallique est un acier non allié ou faiblement allié, ou dans lequel le substrat en feuille métallique est un acier inoxydable, de l'aluminium ou un alliage d'aluminium, ou du titane.

11. Procédé selon l'une quelconque des revendications 7 à 10, dans lequel la première couche métallique (A) est une couche contenant du chrome et la seconde couche métallique (B) est une couche contenant du nickel ou du nickel-molybdène et dans lequel la couche de diffusion d'alliage comprend au moins du nickel et du chrome.

12. Procédé selon l'une quelconque des revendications 7 à 11, dans lequel le substrat en feuille métallique (S) est muni d'une couche contenant du nickel (C) entre le substrat (S) et la seconde couche métallique (B) par une étape d'application où la couche contenant du nickel (C) est une couche de nickel, un alliage de nickel-molybdène, un alliage de nickel-chrome, ou une couche d'alliage de nickel-molybdène-chrome.

13. Procédé selon l'une quelconque des revendications 7 à 12, comprenant la production d'un produit revêtu formé par une étape de formation, et dans lequel une, plusieurs ou toutes les étapes d'application et/ou l'étape de recuit de diffusion ont lieu uniquement après la formation du produit revêtu formé dans l'étape de formation.

14. Procédé selon l'une quelconque des revendications 7 à 12, comprenant la production d'un produit revêtu formé par une étape de formation, et dans lequel les étapes d'application et l'étape de recuit de diffusion ont lieu avant la formation du produit revêtu formé dans l'étape de formation.

15. Pile à combustible ou électrolyseur comprenant un empilement de piles à combustible séparées par des plaques bipolaires selon l'une quelconque des revendications 1 à 6 et/ou produites selon l'une quelconque des revendications 7 à 13.
